(19) Europäisches Patentamt
European Patent Office
Office européen des brevets

(11) **EP 1 669 408 B1**

(12) **EUROPEAN PATENT SPECIFICATION**

(45) Date of publication and mention of the grant of the patent:
**06.05.2015 Bulletin 2015/19**

(21) Application number: **04773169.0**

(22) Date of filing: **16.09.2004**

(51) Int Cl.:
*C08J 3/12* (2006.01)     *G03G 9/083* (2006.01)
*G03G 9/107* (2006.01)     *H01B 3/00* (2006.01)
*H01F 1/113* (2006.01)     *H05K 9/00* (2006.01)

(86) International application number:
**PCT/JP2004/013510**

(87) International publication number:
**WO 2005/030868 (07.04.2005 Gazette 2005/14)**

(54) **SPHERICAL COMPOSITE COMPOSITION AND PROCESS FOR PRODUCING SPHERICAL COMPOSITE COMPOSITION**

KUGELFÖRMIGE VERBUNDZUSAMMENSETZUNG UND HERSTELLUNGSVERFAHREN DAFÜR

COMPOSITION DE COMPOSITE SPHERIQUE ET PROCEDE DE PRODUCTION D'UNE COMPOSITION DE COMPOSITE SPHERIQUE

(84) Designated Contracting States:
**DE FR GB IT**

(30) Priority: **26.09.2003   JP 2003335301**

(43) Date of publication of application:
**14.06.2006   Bulletin 2006/24**

(73) Proprietor: **Mitsui Chemicals, Inc.**
**Tokyo 105-7117 (JP)**

(72) Inventors:
• **SOMEDA, Makoto,c/o Mitsui Chemicals, Inc.,**
**Nagoya-shi,**
**Aichi 4578522 (JP)**
• **AKIYAMA, Satoshi,c/o Mitsui Chemicals, Inc.,**
**Nagoya-shi,**
**Aichi 4578522 (JP)**
• **KURODA, Kyoji,c/o Mitsui Chemicals, Inc.,**
**Nagoya-shi,**
**Aichi 4578522 (JP)**

(74) Representative: **Simons, Amanda Louise**
**J A Kemp**
**14 South Square**
**Gray's Inn**
**London WC1R 5JJ (GB)**

(56) References cited:
**EP-A- 0 248 421      GB-A- 2 075 209**
**JP-A- 2 225 529      JP-A- 5 295 123**
**JP-A- 9 063 822      JP-A- 2001 329 067**

• **DATABASE WPI Week 198939 Thomson Scientific, London, GB; AN 1989-281042 XP002510419 & JP 01 204071 A (FUJI XEROX CO LTD) 16 August 1989 (1989-08-16)**
• **DATABASE WPI Week 199410 Thomson Scientific, London, GB; AN 1994-077701 XP002510420 & JP 06 027743 A (MITA IND CO LTD) 4 February 1994 (1994-02-04)**

**EP 1 669 408 B1**

**Description**

Technical Field

The present invention relates to a spherical composite composition and to a process of producing a spherical composite composition. Specifically, the invention relates to a spherical composite composition with high sphericity comprising a resin comprising unsaturated vinyl units and a magnetic material, which was difficult to produce effectively in the prior arts, and to a process of producing a spherical composite composition which is obtained by adding a magnetic material to an aqueous medium containing a resin dispersed therein, dispersing the material in the medium, and then forming the dispersion into particles by spray drying.

Background Art

In general, a resin polymerized in an aqueous medium is solidified as described in JP-B No. 1967-22684. Further, for a process of obtaining a spherical composite composition comprising a resin and a magnetic material, generally a resin and a magnetic material are melted and kneaded, crushed, classified, and formed into a spherical shape. However, there are problems that the process requires two or more production steps and that the obtained composition has a broad distribution of the average particle diameters, and it is not always satisfactory in a viewpoint of productivity. Especially, for a resin comprising acrylonitrile as a main component, there is a problem that thermal stability at the time of molding is so poor that the quality is lowered by thermal deterioration if melting and kneading are carried out with a magnetic material. In addition, for a resin having high viscosity at the time of melting, a load occurs on the molding machine when melting and kneading are carried out with the magnetic material, which makes production impossible or worse.

Further, JP-A No. 1997-185184 describes a production process of dispersing a magnetic material in a resin. However, since this process involves solution polymerization, the range of the molecular weight to be controlled is narrow, and thus the kind of the monomer is restricted by the kind of the solvent. In addition, there are other problems such as a load in an environmental viewpoint by using the solvent, and the like.

GB 2 075 209 A is concerned with electrophotographic composite carrier particles which comprise abrasive magnetic particles embedded in a polymeric matrix. During use in an admixture with a toner in an electrophotographic process, the carrier particles are said to be abraded to expose a previously unexposed, uncontaminated surface which will maintain a constant triboelectric interaction. This is said to ensure an optimum copy quality over an extended developer life.

EP 0 248 421 A2 describes a carrier for a developer which comprises a core having an average particle size of from 50 to 200 μm and comprising fine magnetic particles dispersed in a binder resin and a polymer overcoat having a critical surface tension of from 10 to 25 dyn/cm formed on the surface of the core. The carrier is said to have improved chargeability, high resistance to surface soiling and high mechanical strength.

JP-A-01204071 is concerned with a carrier which comprises a particle formed by spraying, cooling/solidifying of a molten mixture of a thermoplastic resin and a magnetic powder. When mixed with a toner, the product can be used in a magnetic brush developer for static latent image development.

JP-A-06027743 describes a carrier comprising a spherical granular mixture of a resin prepared by polymerising a polymerisable monomer and a magnetic powder, which has a surface covered by a surface coating layer. The carrier is said to have superior durability, heat resistance and electric characteristics and to give high quality images.

JP-A-05295123 describes a procedure for spray drying a mixture of an emulsion of a polymer having a glass transition temperature of-40°C or higher with a fine metal (compound) powder having an average particle diameter of 50μm or smaller. The obtained composite particles are said to be useful as an anti-static agent for a resin or a rubber and to be applicable to materials such as a coating composition, sealant, electromagnetic wave shield or magnetic tape.

Disclosure of the Invention

Problems to be Solved by the Invention

It is an object of the present invention to solve the above-mentioned problems and thus provide a spherical composite material comprising a resin comprising unsaturated vinyl units and a magnetic material, specifically a spherical composite composition produced by a simple and highly productive production process without the need of two or more production steps; and a process of producing the spherical composite composition. In particular, the invention provides a spherical composite composition obtained by adding a magnetic material to an aqueous medium containing a resin dispersed therein, dispersing the material in the medium, and then forming the dispersion into particles by spray drying; and a process of producing the spherical composite composition.

Means for Solving the Problems

The present inventors have studied extensively to solve such problems, and as a result, they have found that a spherical composite composition with high sphericity in the range of specific particle diameters is obtained by adding a magnetic material with a specific size to an aqueous medium containing a resin with specific the average particle diameter dispersed therein, dispersing the material in the medium, and then forming the dispersion into particles by conducting spray drying under specific spray conditions to bind the resin with the magnetic material, which has led to completion of the invention.

The present invention provides a process of producing a spherical composite composition which comprises adding (B) 5 to 1,000 parts by weight of a magnetic material having the longest length in two-dimensional projection of 0.01 to 50 $\mu$m to 100 parts by weight of a resin dispersed in an aqueous medium, said resin comprising unsaturated vinyl units and having (A-1) an average particle diameter of 0.01 to 1 $\mu$m, (A-2) a glass transition temperature of 50 to 110°C, and (A-3) a weight average molecular weight of 10,000 to 1,000,000, dispersing the material in the medium, and then forming the dispersion into particles by spray drying, wherein the obtained spherical composite composition has an average particle diameter of 1 to 100 $\mu$m, and a sphericity of 0.7 to 1,
wherein the resin comprising unsaturated vinyl units contains 50 to 100 % by weight of at least one kind of a monomer unit selected from an acrylonitrile unit and a methacrylonitrile unit, and
wherein the inlet temperature of hot air in the spray drying device in spray drying is from 100°C to the temperature which is the glass transition temperature of the resin plus 100°C, and the outlet temperature of hot air in the spray drying device is from 50°C to the temperature which is the glass transition temperature of the resin plus 20°C.

The feature of the present production process is that after adding the magnetic material to an aqueous medium having a resin dispersed therein and dispersing the material in the medium, drying and particle formation are carried out by spray drying at the same time. Therefore, the production process is very simple, has good productivity, and the obtained spherical composite composition has high sphericity.

Also provided is a spherical composite composition obtainable by the process of the invention.

Effects of the Invention

The spherical composite composition of the present invention has high sphericity, and can be suitably used in various applications such as a resin magnet, an electric wave absorption material, a magnetic shield material, and a developing agent and a toner carrier used in a developer of the electric photograph process. Furthermore, the process of producing a spherical composite composition of the invention is a production process which makes it possible to produce a spherical composite composition with high sphericity comprising a resin and a magnetic material, which was difficult to produce effectively in the prior arts, whereby it is a production process which is very valuable industrially.

Best Mode for Carrying Out the Invention Hereinafter, the present invention will be explained in detail.

[Resin]

One aspect of the invention is a spherical composite composition with high sphericity comprising specific unsaturated vinyl units and a magnetic material, which can be effectively obtained by a production process of adding a magnetic material to a resin dispersed in an aqueous medium, dispersing the material in the medium, and then forming the dispersion into particles by spray drying, which is another aspect of the invention.

In the invention, the resin may be subjected to polymerization in an aqueous medium, or the powders after the production may be dispersed in an aqueous medium. However, considering the production of a resin having an average particle diameter of 0.01 to 1 $\mu$m, polymerization in an aqueous medium such as emulsion polymerization and suspension polymerization is suitable in a viewpoint of productivity, and further preferred is emulsion polymerization. The smaller average particle diameter or the resin dispersed in the aqueous medium is suitable for dispersing the magnetic material. However, with the average particle diameter of less than 0.01 $\mu$m, it is very difficult to produce a resin dispersed in an aqueous medium, and thus the practically preferable range is 0.01 $\mu$m or more. Further, if the average particle diameter is too large, homogeneous dispersion is difficult, and thus it is preferably 1 $\mu$m or less. From such points, the average particle diameter of the resin dispersed in an aqueous medium is 0.01 to 1 $\mu$m, and preferably 0.1 to 0.5 $\mu$m.

The above-mentioned resin comprising unsaturated vinyl units may be a homopolymer comprising one kind of the unsaturated vinyl units, or a copolymer comprising two or more kinds of the unsaturated vinyl units. The resin contains 50 to 100% by weight of at least one kind of a monomer unit selected from acrylonitrile unit and methacrylonitrile unit. Further, as the unsaturated vinyl units, mention may be made of, for example, another unsaturated nitrile unit, a (meth)acrylic acid alkyl ester unit and an aromatic vinyl unit.

As the monomer of another unsaturated nitrile unit, mention may be made of, for example, $\alpha$-chloroacrylonitrile, and furthermore, as the monomer of the (meth) acrylic acid alkyl ester unit, mention may be made of, for example, methyl (meth)acrylate, ethyl (meth)acrylate, propyl (meth)acrylate and butyl (meth) acrylate. As the monomer of the aromatic vinyl units, mention may be made of, for example, styrene, $\alpha$-methyl styrene, vinyl toluene and vinyl xylene. In addition, as the monomer of other copolymerizable unsaturated vinyl units, mention may be made of, for example, vinyl ether, vinyl ester and $\alpha$-olefin. As the vinyl ester, mention may be made of, for example, vinyl acetate, vinyl propionate and vinyl butyrate. As the vinyl ether, mention may be made of, for example, methylvinyl ether, ethylvinyl ether, propylvinyl ether, butylvinyl ether, methylisopropenyl ether and ethylisopropenyl ether. As the $\alpha$-olefin, mention may be made of, for example, isobutene, 2-methyl-1-butene, 2-methyl-1-pentene, 2-methyl-1-hexene, 2-methyl-1-heptene, 2-methyl-1-octene, 2-ethyl-1-butene and 2-propyl-1-butene.

Among the above-mentioned further monomers of the unsaturated vinyl units, preferred is a methyl (meth) acrylate unit, an ethyl (meth)acrylate unit, a propyl (meth)acrylate unit, a butyl (meth)acrylate unit, a styrene unit, an $\alpha$-methyl styrene unit or a vinyl toluene unit. The acrylonitrile units and methacrylonitrile units are contained in 50 to 100 % by weight in the resin. Furthermore, as used herein, the (meth)acrylic acid alkyl ester means acrylic acid alkyl ester or methacrylic acid alkyl ester.

If the glass transition temperature of the above-mentioned resin is 50°C or higher, production without generation of blocking at a spray part and aggregation upon recovery when the particles are formed becomes possible. Considering the particle formation by spray drying, the glass transition temperature is from 50°C to 110°C.

Further, the weight average molecular weight of the above-mentioned resin needs to be in the specific range, considering particle formation by spray drying. If the weight average molecular weight is 10,000 or more, the glass transition temperature does not become too low, and thus production without generation of blocking at the spray part and aggregation upon recovery becomes possible. If the weight average molecular weight is 1,000,000 or less, the resin is melted by hot air at the time of particle formation, so it binds well to the magnetic material, which makes it possible to obtain a composite composition with high sphericity. Considering such points, the weight average molecular weight is 10,000 to 1,000,000, and preferably 20,000 to 300,000.

[Magnetic material]

For the kind of the magnetic material used in the invention, mention may be made of, for example, a rare earth sintering type such as Nd-Fe-B series and Sm-Co series, ferrite sintering type such as Ba series, Sr series and La-Co substitution series, soft ferrite type such as Mn-Zn series and Ni-Zn series, and miscellaneously, Al-Ni-Co series, Fe-Mn series, Fe-Cr-Co series, Sm-Fe-N series and the like. Further, the shape of the magnetic material is not especially limited, and the shape such as a circular shape, a ring shape, an angular shape or a segment shape can be applied.

The smaller size of the magnetic material is more suitable for dispersion, but if it is too small, it is difficult to handle it. Thus, considering the average particle diameter and the sphericity of the final composition, the longest length in two-dimensional projection is preferably 0.01 to 50 $\mu$m, and further preferably 0.1 to 10 $\mu$m. Further, the amount of the magnetic material to be added is 5 to 1,000 parts by weight, preferably 10 to 800 parts by weight, relative to 100 parts by weight of the resin.

[Production of spherical composite resin]

The process of adding the magnetic material to the aqueous medium having a resin dispersed therein, and then dispersing the material in the medium is not especially limited, and a general process can be used, such as a process wherein the magnetic material is added and then dispersed by a stirring blade, a process wherein dispersion is carried out with a homogenizer, and other processes. Total concentration of the resin and the magnetic material in the aqueous medium is preferably 10 to 85 % by weight, and further preferably 20 to 80 % by weight. If the total concentration is more than 10 % by weight, the concentration is not low, and thus the productivity is not lowered. If the total concentration is less than 85 % by weight, the viscosity of the dispersion is not too high, and thus it is possible to prevent poor transport into the spray device or blocking at the spray part.

Furthermore, in the production of the spherical composite composition of the invention, a dispersing agent can be used in a combination with the aqueous medium. It is preferred that an anion surfactant be contained as the dispersing agent. Among them, at least one anion surfactant selected from an alkylsulfuric acid ester salt, an alkylbenzene sulfonic acid salt, an alkylnaphthalene sulfonic acid salt, an alkylsulfosuccinic acid salt and a fatty acid salt is preferable as the dispersing agent. Further, the amount of the dispersing agent to be used is 0.1 to 10 parts by weight, and preferably, 0.1 to 5 parts by weight, relative to 100 parts by weight of the monomer.

In the process of producing a spherical composite composition of the invention, the magnetic material is added to an aqueous medium having a resin dispersed therein and dispersed in the medium in the above-mentioned manner, and then particle formation by spray drying is carried out. The spraying method in the spray drying is not especially limited, but it may be of a nozzle type, a disk type or other types. Specifically, in the case of the nozzle type, a pressure nozzle type, a pressure two-fluid nozzle type, a two-fluid nozzle type or a four-fluid nozzle type can be employed, and in the case of the disk type, a pin form disk type, a vane form disk type, a Kestner form disk type and the like. Among these, preferred is a pressure nozzle type, a two-fluid nozzle type, a pin form disk type or a vane form disk type, considering the long-run in production and the particle diameter distribution. The collection method is not especially limited, and a one-point collection method, a two-point collection method or the like can be used. Further, the heating source is not also especially limited, and an electricity type, a gas type, a vapor type or the like can be applied. For the method for contact with hot air, a co-current type, a counter-current type or a co-current/counter-current type can be applied. Considering the kind and the concentration of the resin or the dispersion to be used, and the water content of the spherical composite composition after the spray drying, the spray pressure in the case of the nozzle type and the disk rotation number in the case of the disk type are respectively controlled such that the average particle diameter of the obtained spherical composite composition is 1 to 100 $\mu$m and the sphericity is 0.7 to 1, and preferably such that the average particle diameter is 5 to 70 $\mu$m and the sphericity is 0.75 to 1. If the disk rotation number in the case of the disk type is 3000 rpm or more, the sprayed drop is not so big that the average particle diameter of the spherical composite composition does not becomes too large and at the same time, the spherical composite composition can be dried sufficiently. In addition, if the disk rotation number is 50,000 rpm or less, the sprayed drop is not so small that the average particle diameter of the spherical composite composition does not becomes too small. Considering such points, the disk rotation number is preferably 3,000 to 50,000 rpm, and further preferably 5,000 to 20,000 rpm. In the particle formation by spray drying, it is difficult to produce a spherical composite composition having the average particle diameter of less than 1 $\mu$m, while if the average particle diameter is 1 $\mu$m or more, the spherical composite particle is not so small that it is easy to handle. Further, if the average particle diameter is 100 $\mu$m or less, the spherical composite particles can be obtained in high yield after spray drying though it also depends on the size of the magnetic material to be blended, and the high sphericity of the obtained composite composition can be also maintained.

Furthermore, considering the productivity when carrying out spray drying and particle formation at the same time, a specific range of drying condition is required. If the temperature of the inlet for hot air in the spray drying device is 100°C or higher, water may be evaporated during drying, and at the same time the resin may be melted to form particles. If the temperature is the temperature which is the glass transition temperature of the resin plus 100°C or lower, continuous operation without generation of blocking by aggregation and solidification of the resin at the spray part is allowable. Furthermore, if the temperature of the outlet for hot air in the spray drying device is 50°C or higher, the process of drying and particle formation is sufficiently carried out. If it is the temperature which is the glass transition temperature of the resin plus 20°C or lower, it is possible to prevent the resin from adhering to the drying chamber, which allows continuous operation. Considering such points, when carrying out spray drying and particle formation at the same time, the temperature of the inlet for hot air in the spray drying device spray is from 100°C to the temperature which is the glass transition temperature of the resin plus 100°C, and the temperature of the outlet for hot air in the spray drying device is from 50°C to the temperature which is the glass transition temperature of the resin plus 20°C. The composition obtained by the above-mentioned process is a spherical composite composition with high sphericity.

[Resin magnet]

The spherical composite composition with high sphericity of the invention as described above, can be used as a resin magnet. It can be used as a powder as it is, or can be used in various ways such as a powder paint, an applying agent as dispersed in water or a solvent, a molded product after a molding process. Further, the resin magnet can be used in a motor, an electric generator, a rotation controller, a magnet control, a speaker, an electromagnetic buzzer, a magnetic therapeutic machine, a sensor, a magnet chuck.

[Electric wave absorption material]

The spherical composite composition with high sphericity of the invention as described above, can be used as an electromagnetic wave absorption material. It can be used as a powder as it is, or can be used in various ways such as a powder paint, an applying agent as dispersed in water or a solvent, a molded product after molding process. In addition, the electric wave absorption material can be used for an inner wall material of an electric wave dark room, a material for preventing reception interference by reflection of the broadcast wave, a material for preventing radar ghost by electric wave reflection.

[Magnetic shield material]

The spherical composite composition with high sphericity of the invention as described above can be used as a magnetic shield material. It can be used as a powder as it is, or can be used in various ways such as a powder paint, an applying agent as dispersed in water or a solvent, a molded product after molding process. In addition, the magnetic shield material can be used in an internal magnetic shield material of an electrical/electronic device, a protecting shield material of a monitor or a magnetic card, as a shield room.

[Magnetic toner material used in the developer of electric photograph process]

The spherical composite composition with high sphericity of the invention as described above can be used as a magnetic toner material for use in a developer. For example, it can be used for a one-component or two-component electric photograph. When it is used as a magnetic toner, a charge regulating agent, a surface treating agent, carbon black, a coloring agent, a wax may be further added in the inner part or on the surface.

[Toner carrier material used in the developer of electric photograph process]

The spherical composite composition with high sphericity of the invention as described above can be used in a developer of electric photograph process. For example, as a developing agent for a two-component electric photograph as mixed with the toner. When it is used as a toner carrier, it can be used as untreated, or can be used after carrying out surface treatment, heat treatment.
A toner is that in which a coloring agent is dispersed in the binding resin. The amount of the toner to be contained is not especially limited. When the toner is used and consumed for development, it may be suitably added. Usually, the content of the toner is about 10 to 100,000 parts by weight, relative to 100 parts by weight of the spherical composite product for the carrier.

Examples

Hereinafter, the present invention will be further illustrated with reference to Examples and Comparative Examples. The invention is not limited in any way to these examples.
Furthermore, "part" and "%" in Examples and Comparative Examples are intended to be based on weight. In addition, analysis and measurement described in Examples and Comparative Examples were carried out according to the following methods.

(1) Composition of the resin (% by weight).

The composition of carbon, hydrogen and nitrogen to be contained was measured by elemental analysis [manufactured by Yanagimoto Manufacturing, Co., Ltd., CHN CORDER, model: MT-2], and this procedure was repeated three times and averaged to determine the composition of the resin.

(2) Average particle diameter of the resin in the aqueous medium ($\mu$m)

It was measured by HPPS which is a device for particle diameter measurement manufactured by Malvern Instruments Ltd. Furthermore, the average particle diameter is a value based on volume by dynamic light scattering.

(3) Glass transition temperature of the resin (°C)

The temperature of the sample was elevated to 150°C under a nitrogen atmosphere, the sample was placed for 3 minutes at that temperature and then cooled to room temperature at a temperature lowering rate of 10°C/min. Then, when measured using differential scanning calorimetry [manufactured by PERKIN-ELMER, model: DSC-7] at a temperature elevating rate of 5°C/min, the temperature of the cross point between the extension line of the baseline under the glass transition temperature, and the tangent line showing maximum slope from the first starting part of the peak to the top point of the peak, was taken as the glass transition temperature.

(4) Weight average molecular weight of the resin

It was measured by gel permeation chromatography (hereinafter, referred to as GPC) using a mono-dispersed polystyrene standard sample as a standard.

[Measurement device and condition]

GPC: model: 150-C manufactured by Waters corporation

Column: model: 2 pieces of Shodex AD-80M/S manufactured by Showa Denko Co.
Solvent: N,N-dimethylformamide (containing 0.1 % by weight of lithium bromide)
Flow rate: 0.8 ml/min
Column temperature: 60°C
Sample concentration: 0.1 % by weight
Injection amount: 200 $\mu$l
$\mu$lDetector: Refractive index detection type.

(5) Longest length of the magnetic material ($\mu$m)

Using the photographs taken by an electron microscope, the longest lengths of 20 magnetic materials were measured and then averaged.

(6) Productivity in particle formation

Particle formation was carried out for 2 hours continuously by a spray drying device. When nearly no adhesion was found in the spray drying device and no solidified substance was generated in the disk of the spray part after completing the particle formation, the productivity was evaluated as AA; when much adhesion was found, or a solidified substance was generated in the disk of the spray part after completing particle formation, the productivity was evaluated as BB; and when much amount of a solidified substance was generated in the disk of the spray part during particle formation so that operation was not possible for more than 30 minutes, the productivity was evaluated as CC.

(7) Average particle diameter of the spherical composite composition ($\mu$m)

Using MT3000EX manufactured by MICRO TRACK CO., LTD., it was measured by a dry method. Furthermore, the average particle diameter is a value based on volume.

(8) Measurement of sphericity

Using the photographs taken by an electron microscope, (maximum diameters - minimum diameters) of 20 spherical composite compositions were measured, and then averaged. Then, using the value of the average particle diameter of (6), the sphericity was calculated by the following calculation equation.

$$\text{Value} = [\text{average particle diameter} - (\text{difference between the longest diameter and the shortest diameter in two-dimensional projection})]/\text{average particle diameter}.$$

[Production of the resin]

[Preparation Example 1]

15 parts of acrylonitrile, 5 parts of methyl acrylate, 0.407 part of sodium dioctylsulfosuccinate, 150 parts of water were put as raw materials of an initially added fraction to a stainless polymerization reactor, and the temperature was elevated to 60°C with stirring under a nitrogen atmosphere. The mixture was stirred for 30 minutes as it was, an aqueous solution containing 0.08 part of potassium persulfate as a polymerization initiator was added to initiate polymerization.

Next, phosphoric acid was added to regulate pH as $3\pm0.3$, and, polymerization was continued at 60°C while continuously adding 60 parts of acrylonitrile, 20 parts of methyl acrylate, 1.6 parts of pentaerythritol tetrakis($\beta$-mercaptopropionate), 1.627 parts of sodium dioctylsulfosuccinate and 85 parts of water as raw materials of subsequently added fraction.

During the addition, phosphoric acid was also continuously added for 5 hours starting from the initiation of polymerization, so polymerization was carried out for 6 hours with keeping the pH of the polymerization system as $3\pm0.3$. When 8 hours passed from the initiation of polymerization, cooling was carried out to give a resin [A-1]. For this resin, the resin composition, the average particle diameter of the resin in the aqueous medium, the glass transition temperature and the weight average molecular weight were measured according to the above-described methods. The results were as follows:

<Results of the measurement>

Resin composition: 75% acrylonitrile, 25% methyl acrylate
Average particle diameter of the resin in the aqueous medium: 0.22 $\mu$m
Glass transition temperature: 85°C
Weight average molecular weight: 120,000

[Preparation Example 2]

Polymerization was carried out in the same manner as in Preparation Example 1 except that 0.8 part of pentaerythritol tetrakis ($\beta$-mercaptopropionate) was used in Preparation Example 1, to give a resin [A-2] having the following results of the measurement:

<Results of the measurement>

Resin composition: 75% acrylonitrile, 25% methyl acrylate
Average particle diameter of the resin in the aqueous medium: 0.23 $\mu$m
Glass transition temperature: 86°C
Weight average molecular weight: 220,000

[Preparation Example 3]

Polymerization was carried out in the same manner as in Preparation Example 1 except that 4 parts pentaerythritol tetrakis($\beta$-mercaptopropionate) were used in Preparation Example 1, to give a resin [A-3] having the following results of the measurement:

<Results of the measurement>

Resin composition: 75% acrylonitrile, 25% methyl acrylate
Average particle diameter of the resin in the aqueous medium: 0.20 $\mu$m
Glass transition temperature: 81°C
Weight average molecular weight: 30,000

[Preparation Example 4]

Polymerization was carried out in the same manner as in Preparation Example 1 while changing the composition of the initially added fraction and the subsequently added fraction of the raw materials as below, to give a resin [A-4] having the following results of the measurement:

<Initially added fraction>

10 parts of acrylonitrile, 10 parts of methyl methacrylate

<Subsequently added fraction>

40 parts of acrylonitrile, 40 parts of methyl methacrylate

<Results of the measurement>

Resin composition: 50% acrylonitrile, 50% methyl methacrylate
Average particle diameter of the resin in the aqueous medium: 0.22 $\mu$m
Glass transition temperature: 93°C
Weight average molecular weight: 130,000

[Preparation Example 5]

Polymerization was carried out in the same manner as in Preparation Example 1 while changing the composition of the initially added fraction and the subsequently added fraction of the raw materials as below, to give a resin [A-5] having the following results of the measurement:

<Initially added fraction>

10 parts of acrylonitrile, 10 parts of styrene

<Subsequently added fraction>

40 parts of acrylonitrile, 40 parts of styrene

<Results of the measurement>

Resin composition: 50% acrylonitrile, 50% styrene
Average particle diameter of the resin in the aqueous medium: 0.24 $\mu$m
Glass transition temperature: 95°C
Weight average molecular weight: 140,000

[Preparation Example 6]

Polymerization was carried out in the same manner as in Preparation Example 1 while changing the composition of the initially added fraction and the subsequently added fraction of the raw materials as below, to give a resin [A-6] having the following results of the measurement:

<Initially added fraction>

13 parts of acrylonitrile, 7 parts of butyl acrylate

<Subsequently added fraction>

52 parts of acrylonitrile, 28 parts of butyl acrylate

<Results of the measurement>

Resin composition: 65% acrylonitrile, 35% butyl acrylate
Average particle diameter of the resin in the aqueous medium: 0.22 $\mu$m
Glass transition temperature: 55°C
Weight average molecular weight: 130,000

[Preparation Example 7]

Polymerization was carried out in the same manner as in Preparation Example 1 while changing the composition of the initially added fraction and the subsequently added fraction of the raw materials as below, to give a resin [A-7] having the following results of the measurement:

<Initially added fraction>

20 parts of acrylonitrile

<Subsequently added fraction>

80 parts of acrylonitrile

<Results of the measurement>

Resin composition: 100% acrylonitrile
Average particle diameter of the resin in the aqueous medium: 0.20 µm
Glass transition temperature: 100°C
Weight average molecular weight: 130,000

[Preparation Example 8]

Polymerization was carried out in the same manner as in Preparation Example 1 except that 0.2 part pentaerythritol tetrakis(β-mercaptopropionate) was used in Preparation Example 1, to give a resin [A-8] having the following results of the measurement:

<Results of the measurement>

Resin composition: 75% acrylonitrile, 25% methyl acrylate
Average particle diameter of the resin in the aqueous medium: 0.27 µm
Glass transition temperature: 90°C
Weight average molecular weight: 1,200,000

[Preparation Example 9]

Polymerization was carried out in the same manner as in Preparation Example 1 while changing the composition of the initially added fraction and the subsequently added fraction of the raw materials as below, to give a resin [A-9] having the following results of the measurement:

<Initially added fraction>

10 parts of acrylonitrile, 10 parts of ethyl acrylate

<Subsequently added fraction>

40 parts of acrylonitrile, 40 parts of ethyl acrylate

<Results of the measurement>

Resin composition: 50% acrylonitrile, 50% ethyl acrylate
Average particle diameter of the resin in the aqueous medium: 0.23 µm
Glass transition temperature: 45°C
Weight average molecular weight: 130,000

[Magnetic material]

The kind and the longest length in two-dimensional projection of the magnetic material used in Examples and Comparative Examples of the invention are as follows:

B-1: FL-900 (ferrite) manufactured by Toda Kogyo Corp., the longest length of 1.6 $\mu$m,
B-2: FH-800 (ferrite) manufactured by Toda Kogyo Corp., the longest length of 1.4 $\mu$m,
B-3: Wellmax P-10 (Sm-Co series) manufactured by Sumitomo Metal Industries, Ltd., the maximum length of 5.3 $\mu$m,
B-4: Neo40 (Nd-Fe-B series) manufactured by Seiko Sangyo, Co., Ltd., the maximum length of 4.1 $\mu$m,
B-5: SAN40 (Al-Ni-Co series) manufactured by Seiko Sangyo, Co., Ltd., the maximum length of 8.5 $\mu$m.

[Examples 1 to 16 and Comparative Examples 1 to 8]

To an aqueous medium wherein any of the resins (A-1 to A-9) obtained in Preparation Examples 1 to 9 was dispersed, any of the magnetic materials (B-1 to B-4) was added in the compositions a shown in [Table 1] to [Table 3], which was stirred for 30 minutes. Then, particle formation by spray drying was carried out using LT-8 which is the spray drying device manufactured by Ohkawara Kakouki Co., Ltd. under the conditions of [Table 1] to [Table 3]. Furthermore, the type of the spray was the disk type, and the collection method was 2 point collection type.

[Table 1]

| | | Example No. | | | | | | | |
|---|---|---|---|---|---|---|---|---|---|
| | | 1 | 2 | 3 | 4 | 5 | 6 | 7 | 8 |
| Composition | Kind of the resin | A-1 | A-1 | A-1 | A-1 | A-1 | A-1 | A-1 | A-1 |
| | Composition of the resin (part) | 100 | 100 | 100 | 100 | 100 | 100 | 100 | 100 |
| | Kind of the magnetic material | B-1 | B-2 | B-3 | B-4 | B-5 | B-1 | B-1 | B-1 |
| | Composition of the magnetic material (part) | 100 | 100 | 100 | 100 | 100 | 600 | 200 | 10 |
| Condition for particle formation | Inlet temperature of hot air (°C) | 120 | 120 | 120 | 120 | 120 | 120 | 120 | 120 |
| | Outlet temperature of hot air (°C) | 65 | 65 | 65 | 65 | 65 | 65 | 65 | 65 |
| | Disk rotation No. (rpm) | 18,000 | 18,000 | 18,000 | 18,000 | 18,000 | 18,000 | 18,000 | 18,000 |
| Total concentration of the resin and the magnetic material in the aqueous medium (% by weight) | | 46 | 46 | 46 | 46 | 46 | 75 | 56 | 32 |
| Productivity in particle formation | | AA | AA | AA | AA | AA | AA | AA | AA |
| Properties of the composite composition | Average particle diameter ($\mu$m) | 35 | 38 | 33 | 34 | 37 | 36 | 42 | 31 |
| | Sphericity | 0.85 | 0.83 | 0.88 | 0.84 | 0.83 | 0.81 | 0.86 | 0.85 |

[Table 2]

| | | Example No. | | | | | | | |
|---|---|---|---|---|---|---|---|---|---|
| | | 9 | 10 | 11 | 12 | 13 | 14 | 15 | 16 |
| Composition | Kind of the resin | A-1 | A-1 | A-2 | A-3 | A-4 | A-5 | A-6 | A-7 |
| | Composition of the resin (part) | 100 | 100 | 100 | 100 | 100 | 100 | 100 | 100 |
| | Kind of the magnetic material | B-1 | B-1 | B-1 | B-1 | B-1 | B-1 | B-1 | B-1 |
| | Composition of the magnetic material (part) | 100 | 100 | 100 | 100 | 100 | 100 | 100 | 100 |
| Condition for particle formation | Inlet temperature of hot air (°C) | 140 | 120 | 120 | 120 | 140 | 140 | 120 | 180 |
| | Outlet temperature of hot air (°C) | 65 | 75 | 65 | 65 | 70 | 70 | 55 | 70 |
| | Disk rotation No. (rpm) | 18,000 | 18,000 | 18,000 | 18,000 | 18,000 | 18,000 | 18,000 | 18,000 |
| Total concentration of the resin and the magnetic material in the aqueous medium (% by weight) | | 46 | 46 | 46 | 46 | 46 | 46 | 46 | 46 |
| Productivity in particle formation | | AA | AA | AA | AA | AA | AA | AA | AA |
| Properties of the composite composition | Average particle diameter ($\mu$m) | 35 | 36 | 37 | 33 | 35 | 36 | 32 | 33 |
| | Sphericity | 0.85 | 0.83 | 0.83 | 0.84 | 0.81 | 0.84 | 0.88 | 0.92 |

[Table 3]

| | | Comparative Example No. | | | | | | | |
|---|---|---|---|---|---|---|---|---|---|
| | | 1 | 2 | 3 | 4 | 5 | 6 | 7 | 8 |
| Composition | Kind of the resin | A-8 | A-8 | A-9 | A-9 | A-1 | A-1 | A-1 | A-1 |
| | Composition of the resin (part) | 100 | 100 | 100 | 100 | 100 | 100 | 100 | 100 |
| | Kind of the magnetic material | B-1 | B-1 | B-1 | B-1 | B-1 | B-1 | B-1 | B-2 |
| | Composition of the magnetic material (part) | 100 | 100 | 100 | 100 | 100 | 100 | 1500 | 1500 |

(continued)

| | | Comparative Example No. | | | | | | | |
|---|---|---|---|---|---|---|---|---|---|
| | | 1 | 2 | 3 | 4 | 5 | 6 | 7 | 8 |
| Condition for particle formation | Inlet temperature of hot air (°C) | 120 | 140 | 120 | 115 | 240 | 95 | 120 | 120 |
| | Outlet temperature of hot air (°C) | 65 | 65 | 65 | 65 | 150 | 60 | 65 | 65 |
| | Disk rotation No. (rpm) | 18,000 | 18,000 | 18,000 | 18,000 | 18,000 | 18,000 | 18,000 | 18,000 |
| Total concentration of the resin and the magnetic material in the aqueous medium (% by weight) | | 46 | 46 | 46 | 46 | 46 | 46 | 87 | 87 |
| Productivity in particle formation | | AA | AA | BB | CC | CC | BB | CC | CC |
| Properties of the composite composition | Average particle diameter ($\mu$m) | 19 | 21 | 32 | - | - | 43 | - | - |
| | Sphericity | 0.42 | 0.51 | 0.81 | - | - | 0.83 | - | - |

[Reviews of Examples]

Any of the spherical composite composition of the invention (Examples 1 to 16) is excellent in productivity and physical properties of the product (the average particle diameter and the sphericity).

On the other hand, when the weight average molecular weight of the resin is more than 1,000,000 (Comparative Examples 1 and 2), the resin is difficult to melt, and thus formed powders are not bound (bound by the melting of the resin) and the sphericity becomes low. When the glass transition temperature of the resin is lower than 50°C (Comparative Examples 3 and 4), the resin is aggregated or solidified in the disk of the spray parts of the spray dryer, and thus the productivity is poor. When the inlet temperature of hot air is higher than the temperature which is the glass transition temperature of the resin plus 150°C (Comparative Example 5), the resin is aggregated or solidified in the disk of the spray parts and production is not possible. When the inlet temperature of hot air in the spray drier is 100°C or less (Comparative Example 6), drying is not enough in the drying chamber of the spray dryer, so the resin contains a lot of water and adheres to the drying chamber, and thus the productivity is poor. In addition, when the amount of the magnetic material to be added is more than 1,000, relative to 100 parts by weight of the resin (Comparative Examples 7 and 8), the produced powders are not bound and the sphericity becomes low.

Industrial Applicability

The spherical composite composition with high sphericity of the present invention comprising a resin containing unsaturated vinyl units and a magnetic material, can be well used in applications such as a resin magnet, an electric wave absorption material, a magnetic shield material, a magnetic toner material and a toner carrier material. Furthermore, the process of producing a spherical composite composition of the present invention is simple and has good productivity without the need of two or more production steps, whereby it is a process which is very valuable industrially.

**Claims**

1. A process of producing a spherical composite composition which comprises adding (B) 5 to 1,000 parts by weight of a magnetic material having the longest length in two-dimensional projection of 0.01 to 50 $\mu$m, relative to 100 parts by weight of a resin dispersed in an aqueous medium, said resin comprising unsaturated vinyl units and having (A-1) an average particle diameter of 0.01 to 1 $\mu$m, (A-2) a glass transition temperature of 50 to 110°C, and (A-3) a weight average molecular weight of 10,000 to 1,000,000, dispersing the material in the medium, and then forming the dispersion into particles by spray drying, wherein the obtained spherical composite composition has an average particle diameter of 1 to 100 μm, and a sphericity of 0.7 to 1,

wherein the resin comprising unsaturated vinyl units contains 50 to 100 % by weight of at least one kind of a monomer unit selected from an acrylonitrile unit and a methacrylonitrile unit, and

wherein the inlet temperature of hot air in the spray drying device in spray drying is from 100°C to the temperature which is the glass transition temperature of the resin plus 100°C, and the outlet temperature of hot air in the spray drying device is from 50°C to the temperature which is the glass transition temperature of the resin plus 20°C.

2. The process of producing a spherical composite composition according to claim 1, wherein the total concentration of the resin and the magnetic material in the aqueous medium is 10 to 85% by weight.

3. The process of producing a spherical composite composition according to either claim 1 or claim 2, wherein a dispersing agent is used in a combination with the aqueous medium, and the dispersing agent is at least one anionic surfactant selected from an alkylsulfuric acid ester salt, an alkylbenzene sulfonic acid salt, an alkylnaphthalene sulfonic acid salt, an alkylsulfosuccinic acid salt and a fatty acid salt.

4. A spherical composite composition obtainable by a process according to any one of claims 1 to 3.

5. A resin magnet which comprises the spherical composite composition according to claim 4.

6. An electric wave absorption material which comprises the spherical composite composition according to claim 4.

7. A magnetic shield material which comprises the spherical composite composition according to claim 4.

8. A magnetic toner material for use in a developer which comprises the spherical composite composition according to claim 4.

9. A toner carrier material for use in a developer of electric photograph process which comprises the spherical composite composition according to claim 4.


**Patentansprüche**

1. Ein Verfahren zur Herstellung einer sphärischen Kompositzusammensetzung, das umfasst Zugeben von (B) 5 bis 1000 Gewichtsteilen eines magnetischen Materials mit der längsten Länge in zwei-dimensionaler Projektion von 0,01 bis 50 μm zu 100 Gewichtsteilen eines Kunststoffes, dispergiert in einem wässrigen Medium, wobei der Kunststoff ungesättigte Vinyleinheiten aufweist und (A-1) einen durchschnittlichen Teilchendurchmesser von 0,01 bis 1 μm, (A-2) eine Glasübergangstemperatur von 50 bis 110°C und (A-3) ein Gewichtsmittel-Molekulargewicht von 10.000 bis 1.000.000 hat, Dispergieren des Materials in dem Medium und dann Bildung der Dispersion zu Teilchen durch Sprühtrocknung, wobei die erhaltene sphärische Kompositzusammensetzung einen durchschnittlichen Teilchendurchmesser von 1 bis 100 μm und eine Sphärizität von 0,7 bis 1 hat,

wobei der ungesättigte Vinyleinheiten aufweisende Kunststoff 50 bis 100 Gewichtsprozent mindestens einer Monomer Einheit enthält, die aus einer Acrylnitril Einheit und einer Methacrylnitril Einheit ausgewählt ist, und

wobei die Einlasstemperatur der heißen Luft in der Sprühtrocknungsvorrichtung beim Sprühtrocknen von 100°C bis zu der Temperatur, die die Glasübergangstemperatur des Kunststoffs ist, plus 100°C ist, und die Auslasstemperatur der heißen Luft in der Sprühtrocknungsvorrichtung von 50°C bis zu der Temperatur, die die Glasübergangstemperatur des Kunststoffs ist, plus 20°C ist.

2. Das Verfahren zur Herstellung einer sphärischen Kompositzusammensetzung gemäß Anspruch 1, wobei die Gesamtkonzentration des Kunststoffs und des magnetischen Materials in dem wässrigen Medium 10 bis 85 Gewichtsprozent ist.

3. Das Verfahren zur Herstellung einer sphärischen Kompositzusammensetzung gemäß entweder Anspruch 1 oder Anspruch 2, worin ein Dispergierungsmittel in einer Kombination mit dem wässrigen Medium eingesetzt wird, und das Dispergiermedium ist mindestens ein anionisches Tensid ausgewählt aus einem Alkylschwefelsäureestersalz, einem Alkylbenzolsulfonsäuresalz, einem Alkylnaphthalinsulfonsäuresalz, einem Alkylsulfosuccinsäuresalz und einem Fettsäuresalz.

**4.** Eine sphärische Kompositzusammensetzung erhältlich nach einem Verfahren gemäß einem der Ansprüche 1 bis 3.

**5.** Ein Kunststoffmagnet umfassend die sphärische Kompositzusammensetzung gemäß Anspruch 4.

**6.** Ein Absorptionsmaterial für elektronische Wellen, das die sphärische Kompositzusammensetzung gemäß Anspruch 4 umfasst.

**7.** Ein Material zur magnetischen Abschirmung, das die sphärische Kompositzusammensetzung gemäß Anspruch 4 umfasst.

**8.** Ein magnetisches Tonermaterial zur Verwendung in einem Entwickler, das die sphärische Kompositzusammensetzung gemäß Anspruch 4 umfasst.

**9.** Ein Tonerträgermaterial zur Verwendung in einem Entwickler für ein elektrisches fotografisches Verfahren, das die sphärische Kompositzusammensetzung gemäß Anspruch 4 umfasst.


**Revendications**

**1.** Procédé pour produire une composition composite sphérique, comportant l'ajout (B) de 5 à 1000 parties en poids d'une matière magnétique ayant la longueur la plus grande, de 0,01 à 50 $\mu$m, en projection 2D, dans 100 parties en poids d'une résine dispersée dans un milieu aqueux, ladite résine comprenant des unités vinyliques insaturées et ayant (A-1) un diamètre moyen de particules de 0,01 à 1 $\mu$m, (A-2) une température de transition vitreuse de 50 à 110°C, et (A-3) une masse molaire moyenne en poids de 10 000 à 1 000 000, la dispersion de la matière dans le milieu, puis la transformation de la dispersion en particules par séchage par atomisation, la composition composite sphérique obtenue ayant un diamètre moyen de particules de 1 à 100 $\mu$m, et une sphéricité de 0,7 à 1, dans lequel la résine comprenant des unités vinyliques insaturées contient de 50 à 100 % en poids d'au moins un type d'unité monomère choisie parmi une unité acrylonitrile et une unité méthacrylonitrile, et dans lequel la température d'entrée d'air chaud dans le dispositif de séchage par atomisation est de 100°C à la température égale à la température de transition vitreuse de la résine plus 100°C, et la température de sortie d'air chaud dans le dispositif de séchage par atomisation est de 50°C à la température égale à la température de transition vitreuse plus 20°C.

**2.** Procédé pour produire une composition composite sphérique selon la revendication 1, dans lequel la concentration totale de la résine et de la matière magnétique dans le milieu aqueux est de 10 à 85 % en poids.

**3.** Procédé pour produire une composition composite sphérique selon la revendication 1 ou la revendication 2, dans lequel un agent dispersant est utilisé en combinaison avec le milieu aqueux, et l'agent dispersant est au moins un tensioactif anionique choisi parmi un sel d'ester d'acide alkylsulfurique, un sel d'acide alkyl benzène sulfonique, un sel d'acide alkylnaphtalène sulfonique, un sel d'acide alkylsulfosuccinique et un sel d'acide gras.

**4.** Composition composite sphérique pouvant être obtenue par un procédé selon l'une quelconque des revendications 1 à 3.

**5.** Aimant en résine qui comprend la composition composite sphérique selon la revendication 4.

**6.** Matériau d'absorption d'ondes électromagnétiques qui comprend la composition composite sphérique selon la revendication 4.

**7.** Matériau de blindage magnétique qui comprend la composition composite sphérique selon la revendication 4.

**8.** Matériau de toner magnétique destiné à servir dans un révélateur, qui comprend la composition composite sphérique selon la revendication 4.

**9.** Matériau support de toner destiné à servir dans un révélateur de processus photographique électrique, qui comprend la composition composite sphérique selon la revendication 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 196722684 B
- JP 9185184 A
- GB 2075209 A
- EP 0248421 A2
- JP 01204071 A
- JP 06027743 A
- JP 05295123 A